# EUROPEAN PATENT APPLICATION

(11) **EP 0 673 604 A1**
(43) Date of publication of application: **27.09.1995**
(21) Application number: 95200644.3
(22) Date of filing: 16.03.1995
(51) Int. Cl.: A21D 8/06, A21D 10/02

(54) **Method for producing baked pastry products**

(30) Priority: 21.03.1994 NL 9400440
(71) Applicant: Staats, Antonius Petrus, NL-2317 WE Leiden (NL)
(72) Inventor: Staats, Antonius Petrus, NL-2317 WE Leiden (NL)
(74) Representative: Boelsma, Gerben Harm, Ir.

(57) **Abstract**

The invention relates to a method of producing baked pastry products using a baking tin. According to the invention, the dough or batter is packaged in a paper packaging tray which is subsequently to be used as a baking tin of the type according to Dutch Patent Application 9100644. This method, to be performed by the manufacturer, offers the consumer the possibility of baking the pastry product without any significant trouble to himself/herself at any desired instant in a domestic oven and thus to have a freshly baked product with a maximum storage life.

## Description

The invention relates to a method for producing baked pastry products using a baking tin.

Many proposals have been made for increasing the stability of baked pastry products. For example, it is known to freeze products of this type. It is also known to "pre-bake" pastry products (such as French bread) with the object of not completing the baking process until shortly before the time of consumption.

Moreover, it has also been proposed to postpone the baking process until the time of consumption and to package the dough or batter and to supply it to the consumer in a "sausage shape". The drawback of this resides in the fact that baking tins or baking trays have to be greased and cleaned which is often regarded as being too time-consuming by the consumer.

The invention now aims to overcome these drawbacks and to offer the consumer of baked pastry products the possibility of having a fresh, storable product at all times without much trouble on his/her part.

This object is achieved, according to the invention, in that the dough or batter is packaged in a paper packaging tray which is subsequently to be used as a baking tin of the type according to Dutch Patent Application 9100644.

It concerns parallelopipidum-shaped a packaging tray which is erected from a rectangular paper-based sheet which has a first folding line parallel to each of its two longitudinal edges at a distance corresponding to twice the tray height, while there is a second folding line between this folding line and the corresponding longitudinal edge of the sheet, which folding lines extend over the entire length of the sheet, a third folding line which is incised from each of the longitudinal edges to the respective first folding line being present parallel to each of the short sides, that is to say, the terminal edges of the sheet, at a distance corresponding to the tray height, such that the longitudinal side walls are formed by being erected around the first folding line and folded outwards around the second folding line, while from the terminal walls erected around the third folding line, the tongues formed by the incisions being caught in the space between the innermost longitudinal side wall section and the section, folded outwards, of the corresponding longitudinal side wall.

The essential feature of this packaging tray made of paper, particularly paper having a corrugated structure, is that no fixing means, for example rivets or adhesive, are employed for maintaining the erected form of the tray.

As described in the above-mentioned patent application, the sheets for such a packaging tray can be readily produced without any production waste, for example by starting from a storage roll whose width corresponds to that of a sheet, production of the folding lines and of the incisions and cutting-off of the separate sheets taking place by simple techniques which are known per se, while erecting of the packaging trays from the sheets thus obtained can take place immediately thereafter during supply to a filling station.

The pastry material to be received in the packaging tray erected according to the invention can be of different types.

In the case of bread or cake the bread dough or cake batter will completely fill the tray whose dimensions are adapted, of course, to those of the desired bread shape or cake shape. However, the material can also be pastry pieces punched out of a strip of dough, for example pastry pieces for filled cakes or the like which are received in one or more layers in the erected packaging tray.

The packaging tray filled with pastry material or batter can furthermore be covered with a gas-tight foil in a known manner, for example using a so-called protective gas, then pushed into a tubular outer packaging provided with closure flaps at the ends, and stored before sale by the shopkeeper, for example in a cooling cupboard.

The product, which is thus packaged in a state ready for a subsequent baking process, can be stored in a household refrigerator. After removal of the outer packaging, the paper packaging tray with contents can be simply placed into the oven, so that the requisite baking process can take place. Greasing and cleaning of the conventional metal baking tins or baking trays belonging to a domestic oven are thus superfluous.

It should be noted that use of paper in baking processes is known per se as lining of baking cavities in baking plates for so-called "shortbread".

Furthermore EP-A-0368601 discloses a paper made packing tray for dough products, as well as the use of such tray as a baking tin in a postponed baking process. Like the conventional metallic baking tins this well-known paper tray has upwardly diverging side walls to facilitate release of the baked product from the tray.

When practizing the method of the present invention there are two options. In the case of a dough product, entirely filling the packaging tray, for example in the case of bread or cake, the packaging tray will be pressed slightly outwards in the middle of the two opposite double side walls under the influence of the static pressure of the flowing dough material during filling. This circumstance results in the packaging tray tending to maintain its erected form - despite omission of the stabilising effect of the outer packaging - sothat the tray will be able to provide complete support to the dough material or the batter during the baking process. When the baking process has been completed (after about 8 minutes in the case of bread dough and after about 55 minutes for cake dough) the paper baking tin can be easily separated from the baked product and spread out to a flat surface suitable for cutting into slices.

In the case of "self-supporting" pastry pieces, of which there are several in several layers in the packaging tray, it will be possible simply to pull the tray apart to form a flat (paper) baking plate after removal of the outer packaging (foil or wrapping) by holding the longitudinal edges of the outermost longitudinal wall strips of the two projecting double side walls, and it will then be possible to spread the separate pastry pieces out on this plate.

For a more detailed description of the packaging tray to be employed in the method according to the invention and the manner in which it is erected, reference may be made for the sake of brevity to the above-mentioned patent application.

The sheet material preferably used is a two-layer type of paper, one layer of which is flat and the other layer of which is corrugated.

## Claims

1. Method for producing baked pastry products using a baking tin, characterised in that the dough or batter is packaged in a paper packaging tray which is subsequently to be used as a baking tin of the type according to Dutch patent application 9100644.

2. Method according to Claim 1, characterised in that the packaging tray filled with dough (batter) or pastry pieces is covered with a gas-tight foil.

3. Method according to Claim 2, characterised in that a protective gas is employed.

4. Method according to Claim 1, characterised in that the packaging tray filled with dough (batter) or pastry pieces is accommodated in an outer packaging and frozen.
